# EUROPÄISCHE PATENTANMELDUNG

(11) **EP 1 681 392 A1**
(43) Veröffentlichungstag der Anmeldung: **19.07.2006**
(21) Anmeldenummer: 06405008.1
(22) Anmeldetag: 12.01.2006
(51) Int. Cl.: E01C 7/18, C04B 14/06, B02C 9/04

(54) **Herstellung von feinkornarmem Brechsand**

(30) Priorität: 17.01.2005 CH 612005
(71) Anmelder: Hochschule Rapperswil, 8610 Rapperswil (CH)
(72) Erfinder: Bunge, Rainer, Prof. Dr., 8057 Zürich (CH)

(57) **Zusammenfassung**

Die Zerkleinerung von feuchtem Gesteinsmaterial, z.B. aus der Kieswäsche, führt zur Bildung von Feinkornanhaftungen auf den frisch erzeugten Komoberflächen. Solche Anhaftungen sind insbesondere bei der Verwendung des Brechsandes als Asphaltzuschlag unerwünscht. Das erfindungsgemässe Verfahrfen besteht darin, dass das Gestein vor der Zerkleinerung weitgehend getrocknet wird, z.B. durch Druckluft. So wird verhindert, dass die zunächst äusserlich am Gestein anhaftende grobe Feuchte während des Brechvorganges auf die frisch gebildeten Partikeloberflächen verteilt wird und dort das während der Zerkleinerung entstehende Feinstkorn bindet.

## Beschreibung

Die Erfindung fällt in das Gebiet der Verfahrenstechnik. Sie betrifft ein Verfahren nach dem Oberbegriff des unabhängigen Patentanspruchs. Das Verfahren dient zur Herstellung von feinkornarmem Brechsand aus feuchtem Gestein.

Eine Möglichkeit zur Herstellung von Brechsand besteht in der Zerkleinerung von Grobkorn aus der Kieswäsche. Während die Kieskörnungen <64mm im Allgemeinen zur Herstellung von Beton eingesetzt werden, wird das Ueberkorn zerkleinert und hieraus Brechsand hergestellt. Dieser Brechsand wird klassiert und einzelne Korngrössenfraktionen werden beispielsweise als Zuschlagsstoff zur Herstellung von Asphaltbeton für Strassenbeläge eingesetzt.

Problematisch ist, dass für viele Verwendungen von Brechsandfraktionen der Anteil an anhaftendem Feinstkorn <0.063mm durch entsprechende Qualitätsvorschriften eingeschränkt ist. So sehen die Normen für Asphaltzuschläge eine Beschränkung für den Anteil an Feinstkorn in der Brechsandfraktion 2-4mm auf maximal 1% vor (SN670 103; EN13043:2002).

Beim Zerkleinern von frisch gewaschenem Kies bilden sich derartige Feinstkornanhaftungen auf dem Brechsandprodukt. Diese Feinstkornanhaftungen werden durch die Kapillarkraft des Wassers auf den feuchten Brechsandoberflächen festgehalten und betragen häufig mehr als 1% des Gewichtes der Brechsandfraktion. Auch durch eine "harte" Absiebung der Brechsandfraktionen können solche Feinkornanhaftungen nicht hinreichend gut abgetrennt werden.

Um die Kapillarkräfte zu vermindern, käme grundsätzlich eine thermische Trocknung des feinkornbehafteten Brechsandes in Betracht. Allerdings haben unsere Versuche gezeigt, dass Feinstkornanhaftungen, die einmal über eine Flüssigkeitsbrücke an das Grobkorn gebunden waren, auch nach vollständiger thermischer Trocknung kaum durch mechanische Einwirkung von den Grobkomoberflächen entfernbar sind. Dies liegt vor allem daran, dass sich beim Trocknungsprozess stabile Brücken von auskristallisierenden wasserlöslichen mineralischen Stoffen zwischen dem Feinkorn und dem Grobkorn bilden.

Eine naheliegende Lösung des Problems bestünde darin den Brechsand auf mechanische Weise von den Feinstkornanhaftungen zu befreien, z.B. durch den Einsatz von Spannwellensieben, Druckluft, Bürsten und dergleichen. Unsere Versuche haben jedoch ergeben, dass dies nur unvollständig gelingt.

Die nach dem Stand der Technik bekannte Lösung besteht darin den erzeugten Brechsand zu waschen bzw. nass abzusieben. Hierbei werden die Feinstkornanhaftungen entfernt und die so gesäuberten Brechsandfraktionen erfüllen die Grenzwerte für den Feinkornanteil. Diese Lösung ist jedoch unbefriedigend, wenn der Brechsand als Asphaltzuschlag verwendet werden soll. Hierzu muss der Brechsand nämlich trocken vorliegen. Eine Trocknung anschliessend an die Wäsche des zerkleinerten Materials ist jedoch mit einem hohen Energieaufwand verbunden. Zudem muss eine Prozesswasseraufbereitung eingerichtet werden, in der das Feinstkorn wieder aus dem Wasser entfernt wird, was zusätzliche Kosten verursacht.

Der Erfindung liegt die Aufgabe zugrunde, ein Verfahren zu schaffen, das es erlaubt aus gewaschenem Kies einen Brechsand herzustellen, der weniger als 1% Feinstkornanhaftungen hat. Das Verfahren soll "trocken" funktionieren und auf einfache Weise in bestehende Betriebe nachgerüstet werden können.

Diese Aufgabe wird gelöst durch das in den Patentansprüchen definierte Verfahren. Hierbei wird der zur Brechsandherstellung verwendete gewaschene Kies vor der Zerkleinerung getrocknet und nach der Zerkleinerung klassiert. Mit dem Begriff "Trocknung" ist im nachfolgenden Text eine partielle oder auch vollständige Entwässerung gemeint.

Überraschend wurde von uns nämlich gefunden, dass die Bildung von Anhaftungen in einem engen Zusammenhang mit der Feuchte des aus der Kieswäsche gewonnenen Ueberkorns steht. Diese Feuchte beträgt etwa 1-3% des Kiesgewichts und liegt zunächst als grobe Feuchte in Form von Wasserfilmen auf den Oberflächen der unzerkleinerten Kieskörner vor. Dieses Wasser wird während des Brechvorgangs im Brechraum dispergiert, schlägt sich auf den neu gebildeten Bruchoberflächen nieder, und unterstützt dort die Bildung der beschriebenen Feinstkornanhaftungen über kapillare Flüssigkeitsbrücken. Der Kern unserer Erfindung besteht darin, dass die Bildung des Haftkoms an den Bruchoberflächen verhindert wird, indem das Wasser bereits vor der Zerkleinerung weitestgehend entfernt wird. Die auf dem gewaschenen Kieskorn vorliegende "grobe Feuchte" lässt sich bereits durch mechanische Mittel wie Druckluft oder eine "harte" Absiebung weitestgehend entfernen.

Das erfindungsgemässe Verfahren zeichnet sich gegenüber der Wäsche des Brechsandes dadurch aus, dass die Aufbereitung des Prozesswassers und die Trockung des gereinigten Brechsandes entfallen. Zudem fallen auch alle Kornfeinfraktionen trocken an, was ihre Verwertung, z.B. als Filler, erheblich vereinfacht.

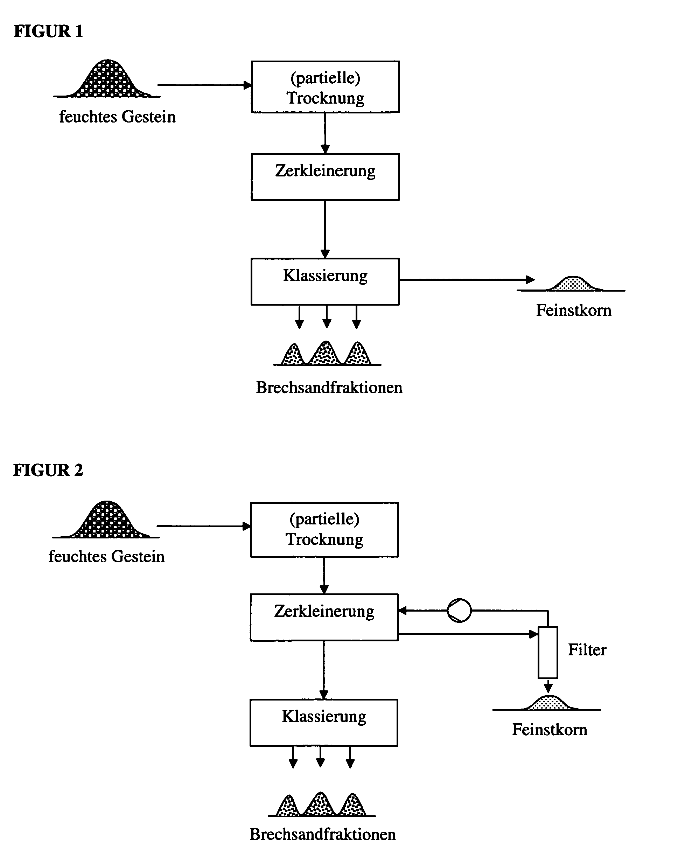

Das Verfahren gemäss Erfindung wird anhand der folgenden Figur im Detail beschrieben. Figur 1 zeigt eine Skizze des erfindungsgemässen Verfahrens. Der feuchte Kies wird zunächst getrocknet und dann zerkleinert. Auf die Zerkleinerung folgt eine Klassierung in die Standard-Siebfraktionen.

Die grobe Feuchte wird in bevorzugten Ausführungen der Erfindung durch mechanische Verfahren reduziert. Im einfachsten Fall wird diese Trocknung durch Abtropfen des Kieses unter Schwerkraft bewirkt. Der feuchte Kies wird hierzu beispielsweise über Nacht abgelagert und erst anschliessend zerkleinert. Eine Alternative ist das "Abblasen" der groben Feuchte mit Druckluft. Eine andere Möglichkeit ist das Abschleudern der groben Feuchte, beispielsweise in Zentrifugen. Eine weitere Alternative ist die Entwässerung auf Geräten, die das Korn hohen Beschleunigungskräften aussetzen, z.B. Spannwellensieben. Hierdurch wird grobe Feuchte von den Kornoberflächen entfernt. Eine weitere Alternative ist die Entwässerung auf Geräten, die das Korn in schnelle Rotation versetzen, z.B. Sternsiebe. Auch so kann die grobe Feuchte von den Kornoberflächen abgeschleudert werden.

In einer beispielhaften Ausführung der Erfindung wird die Trocknung mit Druckluft bewirkt. Hierbei wird das oberste Siebdeck im Kieswerk, auf dem der gewaschene Grobkies abgeschieden wird, mit einer Leiste von Druckluftdüsen ausgerüstet, die das anhaftende Wasser vom gewaschenen Kieskorn abblasen.

Alternativ oder zusätzlich zu der mechanischen Trocknung werden in dem erfindungsgemässen Verfahren oberflächenaktive Chemikalien eingesetzt, insbesondere Tenside, speziell Flotationsmittel. Diese verringern die Oberflächenspannung des Wassers und hydrophobieren die Mineralobeflächen. So wird die mechanische Ablösung der groben Feuchte von den Kornoberflächen unterstützt. Solche Chemikalien werden beispielsweise dem Waschwasser zugesetzt. Falls eine Verwendung des Brechsandes als Asphaltzuschlag vorgesehen ist, werden die hydrophobierenden Chemikalien mit Vorteil so ausgewählt, dass deren mit der Restfeuchte zurückbleibenden Anteile die Bindung des Asphaltes an das Mineralkorn begünstigen. Nach mechanischer Entfernung der groben Feuchte kann nach Bedarf noch eine thermische Trocknung des Kieskorns erfolgen.

Die im erfindungsgemässen Verfahren vorgesehene Klassierung kann vorteilhaft mit der Zerkleinerung kombiniert werden, indem die Zerkleinerungseinrichtung mit einem Ventilator versehen wird, der einen gegen die Schwerkraft gerichteten Luftstrom im Zerkleinerungsraum erzeugt (FIGUR 2). Hierdurch werden die bei der Zerkleinerung entstehenden Feinstkornpartikeln mitgerissen und aus dem Zerkleinerungsraum ausgetragen. Eine Abscheidung dieser Partikeln aus dem Luftstrom wird beispielsweise mittels einem Aerozyklon bewirkt und der entstaubte Luftstrom anschliessend wieder in die Zerkleinerungseinrichtung zurückgeführt. Das so entstaubte Brechgut wird anschliessend konventionell abgesiebt.

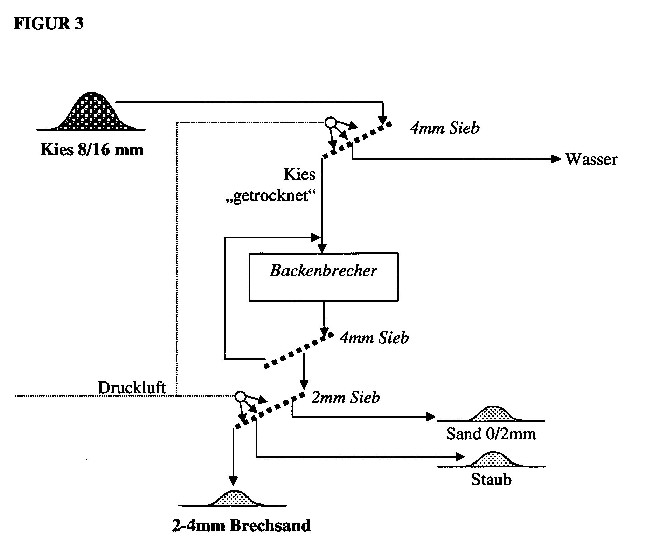

Die Erfindung sei anhand der folgenden Laborversuche erläutert. Die Versuchsapparatur (siehe Figur 3) bestand aus:
- einem Sieb mit 4mm Belag und einer darüber angeordneten Druckluftdüse,
- einem Backenbrecher,
- einem Sieb 4mm Belag,
- einem Sieb mit 2mm Belag mit einer darüber angeordneten Druckluftdüse
   Diese Versuchsapparatur wurde mit tropfnassem Kies 8/16mm beaufschlagt.
   Mit diesem Material wurden drei Versuche durchgeführt, nämlich
- Versuch 1: ohne Drucklufttrocknung vor dem Brecher
- Versuch 2: mit partieller Drucklufttrocknung vor dem Brecher ("weitgehende Trocknung")
- Versuch 3: mit völliger Drucklufttrocknung vor dem Brecher

Bei Versuch 2 war die gesamte äussere Oberfläche des Materials nach der Drucklufttrocknung noch von einem Feuchtigkeitsfilm überzogen. Bei Versuch 3 erschien dieses Material "optisch" trocken.

Die Resultate sind in der folgenden Tabelle zusammengefasst.

| | Kies 8/16 Wassergehalt, % | Kies "getrocknet" Wassergehalt, % | **Brechsand Feinkorn <0.063mm** |
|---|---|---|---|
| Versuch 1 | 1.9% | 1.9% | **6%** |
| Versuch 2 | 1.9% | 0.2% | **0.37%** |
| Versuch 3 | 1.9% | 0% | **0.21%** |

Der vollständig trockene Kies führt also gemäss Versuch 3 zu einem Feinkornanteil von 0.21% im Brechsand 2-4mm. Nur etwas mehr Feinkorn enthält der Brechsand des weitgehend getrockneten Kieses. Dem gegenüber enthält der Brechsand aus dem tropfnassen Kies 6% anhaftendes Feinkorn <0.063mm.

Offenbar ist es mit dem erfindungsgemässen Verfahren möglich einen Brechsand mit weniger als 1% Feinkorn <0.063mm zu erzeugen, sofern der tropfnasse Kies vor dem Brechen mit Druckluft weitgehend getrocknet wird.

## Patentansprüche

1. Verfahren zur Herstellung von feinstkornarmem Brechsand aus feuchtem Gestein **gekennzeichnet dadurch, dass** das Gestein zunächst wenigstens weitgehend getrocknet wird, anschliessend zerkleinert und schliesslich klassiert wird.

2. Verfahren nach Anspruch 1 **gekennzeichnet dadurch, dass** das Gestein eine Korngrösse über 16mm hat, vorzugsweise über 32mm.

3. Verfahren nach einem der Ansprüche 1 oder 2 **gekennzeichnet dadurch, dass** das Gestein eine Feuchte von mehr als 0.5 Gewichts-% hat, vorzugsweise mehr als 1 Gewichts %.

4. Verfahren nach einem der Ansprüche 1 bis 3 **gekennzeichnet dadurch, dass** die weitgehende Trocknung auf eine Restfeuchte von weniger als 0.5 Gewichts-% erfolgt.

5. Verfahren nach einem der Ansprüche 1 bis 4 **gekennzeichnet dadurch, dass** die weitgehende Trocknung mechanisch erfolgt, oder mechanisch/thermisch, insbesondere mit Druckluft.

6. Verfahren nach Anspruch 5 **gekennzeichnet dadurch, dass** die mechanische Trocknung durch den Einsatz von oberflächenaktiven Substanzen, vorzugsweise solchen, welche die Mineraloberflächen hydrophobieren, unterstützt wird.

7. Verfahren nach einem der Ansprüche 1 bis 6 **gekennzeichnet dadurch, dass** während oder nach der Zerkleinerung eine Entstaubung des erzeugten Brechsands durch mechanische Scherkräfte stattfindet.

8. Verfahren nach Anspruch 7 **gekennzeichnet dadurch, dass** die Entstaubung durch eine "harte" Absiebung, durch einen Luftstrom oder durch Bürsten bewirkt wird.

9. Nach dem in den Ansprüchen 1 bis 8 beschriebenen Verfahren hergestellte Brechsandfraktion >2mm mit weniger als 1% Gewichtsanteil an Feinstkorn <0.063 mm.

10. Vorrichtung zur Herstellung von feinstkornarmem Brechsand aus feuchtem Gestein mit einer mittleren Korngrösse über 16mm **gekennzeichnet dadurch, dass** diese Vorrichtung aus den folgenden Geräten besteht, die in der folgenden Reihenfolge nacheinander geschaltet sind:
• ein Gerät zur wenigstens weitgehenden Trocknung des feuchten Gesteins, vorzugsweise mittels Druckluft
• ein Gerät zur Zerkleinerung des weitgehend getrockneten Gesteins, vorzugsweise ein Prallbrecher
• ein Gerät zur mechanischen Abtrennung von Feinstkorn aus dem zerkleinerten Gestein, vorzugsweise mittels Siebung, mittels Luftstrom oder mittels Bürsten.

11. Vorrichtung nach Anspruch 10 **gekennzeichnet dadurch, dass** das Gerät zur Trocknung des feuchten Gesteins Druckluftdüsen enthält, die über einem Siebdeck angeordnet sind.
